# EUROPEAN PATENT APPLICATION

(11) **EP 3 770 400 A1**
(43) Date of publication of application: **27.01.2021**
(21) Application number: 20187522.6
(22) Date of filing: 23.07.2020
(51) Int. Cl.: F02C 7/04, B64D 23/00, F02C 7/057, F02K 5/00, B64D 33/02

(54) **LOW POWER HYBRID TURBOFAN DRAG REDUCTION**

(30) Priority: 25.07.2019 US 201916521633
(71) Applicant: Raytheon Technologies Corporation, Farmington, CT 06032 (US)
(72) Inventor: TERWILLIGER, Neil, Meriden, CT Connecticut 06450 (US); PRASAD, Dilip, North Granby, CT Connecticut 06050 (US)
(74) Representative: Dehns

(57) **Abstract**

A method of operating a turbofan engine (20) includes coupling an electric motor (66) to drive a fan (22) rotatable within a nacelle (18), detecting an in-flight operating condition indicative of an increase in drag, and driving rotation of the fan (22) with the electric motor (66) to redirect a flow of air through the nacelle (18) to reduce drag. A turbofan engine (20) is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

The fan section may generate a drag on the aircraft during low or engine off conditions during flight. The increased drag created during low or engine off conditions may impact engine and aircraft performance efficiency.

### SUMMARY

In accordance with a first aspect of the present disclosure, a method of operating a turbofan engine includes coupling an electric motor to drive a fan rotatable within a nacelle, detecting an in-flight operating condition indicative of an increase in drag, and driving rotation of the fan with the electric motor to redirect a flow of air through the nacelle to reduce drag.

In an embodiment according to the previous embodiment, the in-flight operating condition includes one of a low engine power condition or an engine off condition.

In another embodiment according to any of the previous embodiments, the nacelle includes a plurality of exit guide vanes aft of the fan and redirecting a flow air includes adjusting an incident angle of airflow relative to a fan rotational axis from the fan by rotating the fan with the electric motor.

In another embodiment according to any of the previous embodiments, the incident angle of airflow is adjusted from a first angle corresponding with a non-powered fan to a second angle corresponding with a powered rotation of the fan.

In another embodiment according to any of the previous embodiments, the first angle is less than the second angle.

In another embodiment according to any of the previous embodiments, a portion of the increase in drag is generated by an airflow stagnation region at a leading edge of the nacelle being at a first location and driving rotation of the fan includes adjusting the airflow stagnation region at the leading edge toward a second location corresponding with a reduced drag condition.

In another embodiment according to any of the previous embodiments, the first location is radially inboard of the second location at the leading edge of the nacelle.

In another embodiment according to any of the previous embodiments, a controller receives information indicative of the in-flight operating condition and controls operation of the electric motor to drive the fan.

In another embodiment according to any of the previous embodiments, an energy storage system is coupled to the electric motor and provides energy to the electric motor in response to detecting the in-flight operating condition indicative of an increase in drag.

In another embodiment according to any of the previous embodiments, the turbofan engine includes a fan drive gear system coupled between a shaft driven by a turbine section and the electric motor is coupled to the shaft to drive the fan through the fan drive gear system.

In another embodiment according to any of the previous embodiments, the turbine section and shaft include a portion of a low spool.

In accordance with a second aspect of the present disclosure, a turbofan engine includes a fan rotatable about an axis within a nacelle. An electric motor is coupled to the fan. A controller is programmed to operate the electric motor to rotate the fan to redirect a flow of air through the nacelle to reduce drag during an in-flight operating condition indicative of an increase in drag.

In an embodiment according to the previous embodiment, a plurality of exit guide vanes are within the nacelle aft of the fan and the controller is programmed to adjust an incident angle of airflow relative to a fan rotational axis from the fan by rotating the fan with the electric motor.

In another embodiment according to any of the previous embodiments, the incident angle of airflow is adjusted from a first angle corresponding with a non-powered fan to a second angle corresponding with powered rotation of the fan. The first angle is less than the second angle.

In another embodiment according to any of the previous embodiments, the controller is in communication with systems providing information indicative of engine operation for determining the in-flight operating condition indicative of an increase in drag.

In another embodiment according to any of the previous embodiments, a portion of the increase in drag is generated by an airflow stagnation region at a leading edge of the nacelle being at a first location and the controller operates the electric motor to rotate the fan to adjust the airflow stagnation region at the leading edge toward a second location corresponding with a reduced drag condition, wherein the first location is radially inboard of the second location at the leading edge of the nacelle.

In another embodiment according to any of the previous embodiments, an energy storage system is coupled to the electric motor and providing energy to the electric motor.

In another embodiment according to any of the previous embodiments, a fan drive gear system is coupled to a shaft driven by a turbine section for driving the fan at a speed different than the turbine section. The electric motor is coupled to the shaft to drive the fan through the fan drive gear system.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example turbofan engine.
Figure 2 is a schematic view of an example orientation between fan blades and fan exit guide vanes within a bypass flow passage.
Figure 3 is a schematic view of a front portion of an example turbofan engine embodiment.
Figure 4 is a schematic view of a leading edge of an example nacelle.

### DETAILED DESCRIPTION

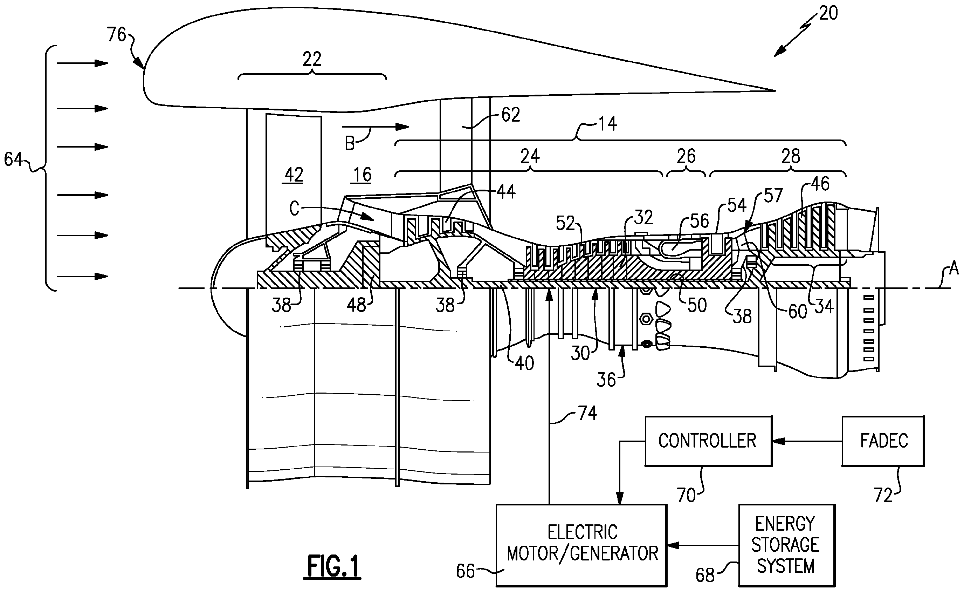

Figure 1 schematically illustrates a turbofan engine 20. The turbofan engine 20 is disclosed herein as a two-spool turbofan that generally incorporates a fan section 22 and a core engine section 14 including a compressor section 24, a combustor section 26 and a turbine section 28. The fan section 22 drives bypass airflow B along a bypass passage 16 defined within a nacelle 18, and also drives air along a core flow path C for compression and communication into the combustor section 26 followed by expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that the bearing systems 38 may be provided at different locations and that the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan section 22 through a speed change mechanism, which in the exemplary engine 20 is illustrated as a geared architecture 48 to drive fan blades 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary turbofan engine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing the systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor 44 and the fan blades 42 may be positioned forward or aft of the location of the geared architecture 48 or even aft of the turbine section 28.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the bypass ratio is greater than about ten, a fan diameter is significantly larger than that of the low pressure compressor 44, and the low pressure turbine 46 has a pressure ratio that is greater than about five. The pressure ratio of the low pressure turbine 46 is the pressure measured prior to an inlet of the low pressure turbine 46 as related to the pressure measured at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture turbofan engine and that the present invention is applicable to other gas turbine engines including direct drive turbofans.

A significant amount of thrust is provided by the bypass airflow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blades 42 alone, without consideration of a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about twenty-six fan blades 42. In another non-limiting embodiment, the fan section 22 includes less than about twenty fan blades 42. Moreover, in one disclosed embodiment the low pressure turbine 46 includes no more than about six turbine rotors schematically indicated at 34. In another non-limiting example embodiment, the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example turbofan turbine engine 20 with increased power transfer efficiency.

The nacelle 18 includes a leading edge 76 forward of the fan blades 22 and a plurality of exit guide vanes 62 (one shown in Figure 1) disposed about the axis A within the bypass passage 16. The leading edge 76 of the nacelle 18 and fan exit guide vanes 62 are configured to provide efficient airflow during engine operation where the fan 22 is rotating to provide a propulsive thrust. Airflow through the bypass duct 16 may be disrupted when the fan section 22 is not rotating under power from the engine 20. The fan section 22 may rotate in the non-powered condition in response to airflow through the fan blades 42 due to forward movement of the aircraft. The rotation of the fan section 22 in response to such an airflow is typically referred to as windmilling. The nacelle 18 is configured based at least in part on drag performance when the fan section 22 is windmilling. The nacelle 18 is configured to prevent excessive drag during windmilling operation of a non-operating engine. The disrupted airflow within the bypass duct 16 generated during windmilling may cause partial blockage of airflow that disrupts incoming airflow schematically shown at 64 at the leading edge 76 of the nacelle 18. The disruption of incoming airflow 64 may result in an increase in drag produced by the non-powered engine above predefined limits triggering modifications to the nacelle 18 to accommodate engine off conditions. Any modification to the nacelle 18 to address engine off operation may reduce operating efficiencies during normal engine operating conditions.

A disclosed engine embodiment includes an electric motor 66 coupled to drive the inner shaft 40 during low or no power engine operating conditions to drive the fan section 22 to redirect a flow of air through the nacelle 18 to reduce drag produced by the non-powered engine during in-flight operating conditions. Rotation of the fan directs a flow of air through the nacelle 18 at an incident angle that is moved toward an incident angle of airflow provided during normal engine operation of the fan section 22. Movement away from an incident angle corresponding with a low or non-powered fan reduces drag generated by the nacelle.

A coupling 74 is provided between the electric motor 66 and the inner shaft 40 to drive the low spool 30 and thereby the fan section 22 through the geared architecture 48. The example coupling 74 is shown schematically and may include a tower shaft and/or gear system. Moreover, other coupling systems and structures for driving the low spool 30 are within the contemplation and scope of this disclosure.

The electric motor 66 receives power from an energy storage system 68 aboard the aircraft and/or part of the engine 20. The energy storage system 68 may be a battery system aboard the aircraft or alternatively be drawn from a generator driven by another engine aboard the aircraft. The electric motor 66 may be an electric motor/generator 66 and used to generate electric energy for operation of the engine 20 and for other aircraft systems.

Operation of the electric motor 66 to drive the fan section 22 is governed by a controller 70. The controller 70 may be a single controller dedicated to operation of the electric motor 66 or a part of an overall engine control system. The controller 70 receives information indicative of engine and aircraft operation from various systems of the engine and aircraft such as a Full Authority Digital Engine Control (FADEC) 72. The controller 70 uses the gathered information to detect an engine operating condition that is indicative of an increase in drag. Such operating conditions indicative of an increase in drag can include, low speed engine operation not sufficient to generate a propulsive thrust nor to preferentially direct airflow entering the bypass passage 16. Additionally, an engine off condition where the fan section 22 is not being turned by operation of the engine 20 is also indicative of conditions that would increase in drag produced by the engine 20.

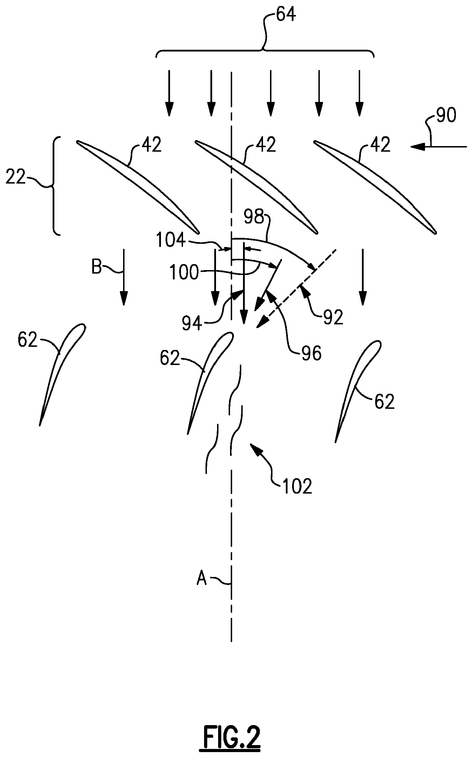

Referring to Figure 2, with continued reference to Figure 1, the fan exit guide vanes 62 are shown schematically in relation to fan blades 42. During normal operation, the fan blades 92 are driven in a direction 90 at a speed determined to produce the desired propulsive thrust. The speed of the fan blades 42 along with the shape and angle of the blades 42 moves airflow toward the fan exit guide vanes 62 along a line 92 at an incident angle 98. The fan exit guide vanes 62 are angled to correspond to the intended incident angle 92 for efficient normal engine operation.

In a non-powered condition, the fan blades 42 are not rotating at the speed required to direct the airflow at the normal incident angle 92. Instead, the airflow impacts the fan exit guide vanes 62 along a line 94 disposed at an incident angle 104 that is substantially parallel to the engine axis A. The direct impact of airflow along the line 94 at the incident angle 104 generates a separation of airflow shown schematically at 102. The separation of airflow 102 from the fan exit guide vane 62 disrupts airflow and generates a blockage to entering airflow 64 that results in an increase in drag produced by the now non-operating engine 20.

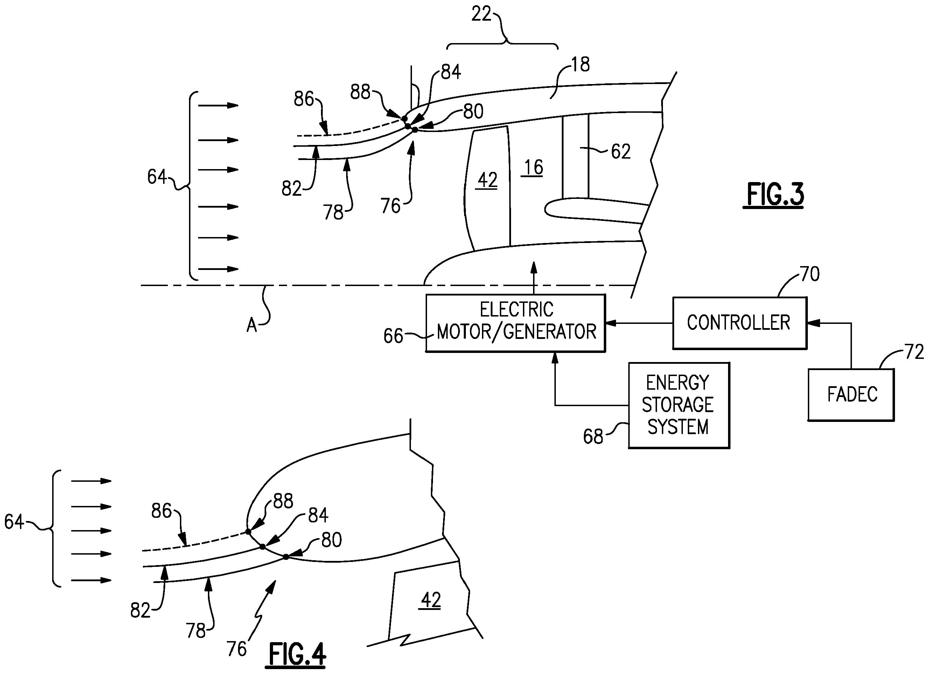

Referring to Figures 3 and 4 with continued reference to Figure 2, incoming airflow 64 enters the bypass passage 16 and the fan blades 42 direct the airflow to produce a propulsive thrust. In the process of producing thrust, the fan blades 42 drive and direct the bypass airflow B toward the guide vanes 62.

Powered rotation of the fan blades 42 preferentially redirects the bypass airflow B through the bypass passage 16 along the line 92 at the defined incident angle 98 accommodated by the fan exit guide vanes 62. However, non-powered operation results in the bypass airflow impacting the exit guide vanes 62 along the line 94 at incident angle 104 that results in an increased resistance to airflow through the nacelle 18.

The resistance to airflow through the bypass passage 16 for normal engine operation is accommodated by the leading edge 76 of the nacelle 18. The leading edge 76 is configured to move a stagnation point 88 radially outboard away from the axis A to substantially reduce and/or eliminate adverse drag. The stagnation point 88 corresponds with a stagnation streamline 86 toward the leading edge 76. During powered engine operation, the fan section 22 drives airflow along the bypass passage 16 such that a resistance to airflow therethrough is such that the stagnation point 88 and stagnation streamline 86 remain at the intended design location.

However, when the fan section 22 is not operating normally, the stagnation point and corresponding stagnation streamline shifts radially inward as indicated by stagnation point 80 and stagnation streamline 78. The inward shift of the stagnation streamline 78 and stagnation point 80 increases drag produced by the nacelle and may generate additional drag phenomena. Moreover, operation with the stagnation streamline 78 at the stagnation point 80 may increase spillage drag and potentially induce shock drag on the nacelle 18.

The example engine 20 utilizes the electric motor 66 to drive rotation of the fan blades 42 in response to detection of an engine off condition to redirect airflow through the bypass passage 16 to reduce drag. The redirected flow of air directs airflow along a line 96 at an incident angle 100 (Figure 2) more toward the operational incident angle 98 to reduce separation indicated at 102 and thereby reduce blockage and drag. The reduction in resistance and blockage to airflow through the bypass passage 16 will also move the stagnation point away from the point 80 and toward the normal operating stagnation point indicated at 88 (Figure 4). In this example, the stagnation point is moved radially outboard toward the point 88 to a point 84 corresponding with stagnation streamline 82. Although the stagnation point 84 and corresponding stagnation streamline 82 are not fully moved back to the normal operational point 88, the move outboard reduces drag an amount sufficient to avoid redesign of the nacelle 18 to accommodate aircraft operational requirements for engine off conditions.

In operation, with the engine operating normally the fan blades 42 are driven in the direction 90 at a speed sufficient to generate propulsive thrust and direct airflow toward the fan exit guide vanes 62 along the line 92 at the incident angle 98 (Figure 2). Upon an engine off condition, the fan blades 42 are no longer powered by the engine 20 and rotate at a slower speed than in the powered condition. The slower rotational speed of the blades 42 results in movement of the incident angle toward a straight on flow condition along the line 94 at the incident angle 104.

The controller 70 detects the conditions that are indicative of an increase in drag. Detection of the increased drag condition can be provided according to a predefined operational parameter such as shaft speed of the inner shaft 40. Moreover, the indication of a drag condition can be detected utilizing other engine parameters that are monitored and controlled by the engine FADEC 72 including temperature, fuel flow, pressure and any other condition indicative of normally operating engine. Upon recognition of the increased drag condition, the controller 70 will operate the electric motor 66 to drive rotation of the fan section 22. The electric motor 66 does not drive the fan section 22 in a manner intended for producing a propulsive thrust. The electric motor 66 drives the fan section 22 such that the bypass flow B will be directed along a line at an incident angle more closely resembling normal flow along the line 92 at the incident angle 98 attained during normal propulsive operation of the engine 20.

In this example, the electric motor 66 drives rotation of the fan blades 42 in the direction 90 to provide an airflow along the line 96 at the incident angle 100 against the fan exit guide vanes 62 that produces a decreased amount of separation 102 compared to non-powered rotation of the fan section 22. In this example embodiment, the incident angle 100 is greater than the incident angle 100 along the line 94. The airflow directed along the incident angle 100 relative to the engine axis A reduces resistance to airflow through bypass passage 16, thereby moving the stagnation streamline 78 outboard toward the stagnation point 84 (Figure 4).

Accordingly, the example turbofan engine 20 includes an electric motor 66 for driving the fan section 22 in engine off conditions to redirect airflow to adjust an incident angle of airflow at the exit guide vanes 62 to reduce blocking resistance of airflow through the bypass passage 16 thereby reducing overall drag induced by the nacelle 18.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A method of operating a turbofan engine (20) comprising:
coupling an electric motor (66) to drive a fan (22) rotatable within a nacelle
(18); detecting an in-flight operating condition indicative of an increase in drag; and
driving rotation of the fan (22) with the electric motor (66) to redirect a flow of air through the nacelle (18) to reduce drag.

2. The method as recited in claim 1, wherein the in-flight operating condition comprises one of a low engine power condition or an engine off condition.

3. The method as recited in claim 1 or 2, wherein the nacelle (18) includes a plurality of exit guide vanes (62) aft of the fan (22) and redirecting a flow of air includes adjusting an incident angle (100) of airflow relative to a fan rotational axis (A) from the fan (22) by rotating the fan (22) with the electric motor (66).

4. The method as recited in claim 3, wherein the incident angle (100) of airflow is adjusted from a first angle (104) corresponding with a non-powered fan (22) to a second angle (98) corresponding with a powered rotation of the fan (22), and wherein, optionally, the first angle (104) is less than the second angle (98).

5. The method as recited in any preceding claim, wherein a portion of the increase in drag is generated by an airflow stagnation region at a leading edge (76) of the nacelle (18) being at a first location (80) and driving rotation of the fan (22) comprises adjusting the airflow stagnation region at the leading edge (76) toward a second location (84) corresponding with a reduced drag condition, and wherein, optionally, the first location (80) is radially inboard of the second location (84) at the leading edge (76) of the nacelle (18).

6. The method as recited in any preceding claim, including a controller (70) receiving information indicative of the in-flight operating condition and controlling operation of the electric motor (66) to drive the fan (22).

7. The method as recited in any preceding claim, including an energy storage system (68) coupled to the electric motor (66) and providing energy to the electric motor (66) in response to detecting the in-flight operating condition indicative of an increase in drag.

8. The method as recited in any preceding claim, wherein the turbofan engine (20) includes including a fan drive gear system (48) coupled between a shaft (40) driven by a turbine section (28) and the electric motor (66) is coupled to the shaft (40) to drive the fan (22) through the fan drive gear system (48), and wherein, optionally, the turbine section (28) and shaft (40) comprise a portion of a low spool (30).

9. A turbofan engine (20) comprising:
a fan (22) rotatable about an axis (A) within a nacelle (18);
an electric motor (66) coupled to the fan (22); and
a controller (70) programmed to operate the electric motor (66) to rotate the fan (22) to redirect a flow of air through the nacelle (18) to reduce drag during an in-flight operating condition indicative of an increase in drag.

10. The turbofan engine (20) as recited in claim 9, including a plurality of exit guide vanes (62) within the nacelle (18) aft of the fan (22) and wherein the controller (70) is programmed to adjust an incident angle (100) of airflow relative to the fan rotational axis (A) from the fan (22) by rotating the fan (22) with the electric motor (66).

11. The turbofan engine (20) as recited in claim 10, wherein the incident angle (100) of airflow is adjusted from a first angle (104) corresponding with a non-powered fan (22) to a second angle (98) corresponding with powered rotation of the fan (22), the first angle (104) being less than the second angle (98).

12. The turbofan engine (20) as recited in any of claims 9 to 11, wherein the controller (70) is in communication with systems (72) providing information indicative of engine operation for determining the in-flight operating condition indicative of an increase in drag.

13. The turbofan engine (20) as recited in any of claims 9 to 12, wherein a portion of the increase in drag is generated by an airflow stagnation region at a leading edge (76) of the nacelle (18) being at a first location (80) and the controller (70) operates the electric motor (66) to rotate the fan (22) to adjust the airflow stagnation region at the leading edge (76) toward a second location (84) corresponding with a reduced drag condition, wherein the first location (80) is radially inboard of the second location (84) at the leading edge (76) of the nacelle (18).

14. The turbofan engine (20) as recited in any of claims 9 to 13, including an energy storage system (68) coupled to the electric motor (66) and providing energy to the electric motor (66).

15. The turbofan engine (20) as recited in any of claims 9 to 14, including a fan drive gear system (48) coupled to a shaft (40) driven by a turbine section (28) for driving the fan (22) at a speed different than the turbine section (28), wherein the electric motor (66) is coupled to the shaft (40) to drive the fan (22) through the fan drive gear system (48).
